# EUROPÄISCHE PATENTSCHRIFT

(11) **EP 1 264 096 B1**
(45) Veröffentlichungstag und Bekanntmachung des Hinweises auf die Patenterteilung: **26.10.2005**
(21) Anmeldenummer: 01929346.3
(22) Anmeldetag: 16.02.2001
(51) Int. Cl.: F02D 41/14, F02D 21/08, F02D 41/02, F01N 9/00

(54) **VERFAHREN UND VORRICHTUNG ZUR DURCHFÜHRUNG EINER NOX-REGENERATION EINES IN EINEM ABGASKANAL EINER VERBRENNUNGSKRAFTMASCHINE ANGEORDNETEN NOX-SPEICHERKATALYSATORS**
METHOD AND DEVICE FOR CARRYING OUT AN NOx REGENERATION OF AN NOx STORAGE-TYPE CATALYTIC CONVERTER MOUNTED IN AN EXHAUST GAS CHANNEL OF AN INTERNAL COMBUSTION ENGINE
PROCEDE ET DISPOSITIF POUR EFFECTUER LA REGENERATION DE NOx D'UN POT CATALYTIQUE D'ACCUMULATION DE NOx MONTE DANS LE CONDUIT DE GAZ D'ECHAPPEMENT D'UN MOTEUR A COMBUSTION INTERNE

(30) Priorität: 02.03.2000 DE 10010032
(43) Veröffentlichungstag der Anmeldung: 11.12.2002
(73) Patentinhaber: Volkswagen Aktiengesellschaft, 38436 Wolfsburg (DE)
(72) Erfinder: POTT, Ekkehard, 38518 Gifhorn (DE); HAHN, Hermann, 30175 Hannover (DE); HINZE, Sören, 38102 Braunschweig (DE); ZILLMER, Michael, 38173 Sickte (DE)
(74) Vertreter: Schneider, Henry
(86) Internationale Anmeldenummer: PCT/EP2001/001789
(87) Internationale Veröffentlichungsnummer: WO 2001/065098

(56) Entgegenhaltungen:
- EP-A- 0 752 521
- EP-A- 0 889 219
- DE-C- 19 824 915

## Beschreibung

Die Erfindung betrifft ein Verfahren und eine Vorrichtung zur Durchführung einer NOₓ-Regeneration eines in einem Abgaskanal einer Verbrennungskraftmaschine angeordneten NOₓ-Speicherkatalysators mit den im Oberbegriff der Ansprüche 1 und 9 genannten Merkmalen.

Um eine Nachbehandlung von Abgasen von Verbrennungskraftmaschinen, insbesondere von zeitweise mager laufenden Verbrennungskraftmaschinen, durchzuführen, ist es bekannt, Katalysatoren mit NOₓ-Speicherfunktion (NOₓ-Speicherkatalysatoren) in Abgassträngen der Verbrennungskraftmaschinen anzuordnen. Der Katalysator reduziert dabei eine Emission von Schadstoffen, indem er eine Konvertierung von Abgasbestandteilen, wie Kohlenmonoxid, unverbrannten Kohlenwasserstoffen und Stickoxiden, in weniger umweltrelevante Verbindungen fördert. Derzeit wird ein möglichst dauerhafter Betrieb von Verbrennungskraftmaschinen in einem mageren Betriebsmodus mit λ > 1, das heißt mit einem Sauerstoffüberschuss in einem zugeführten Luft-Kraftstoff-Gemisch, angestrebt. Unter diesen Bedingungen wird ein Kraftstoffverbrauch reduziert. Auf der anderen Seite kann im Magermodus wegen des Sauerstoffüberschusses keine vollständige katalytische Reduktion von NOₓ erreicht werden. Stattdessen erfolgt im Magerbetrieb eine Absorption von NOₓ in den NOₓ-Speicherkatalysator. Wegen einer begrenzten NOₓ-Speicherkapazität des Katalysators muss dieser in periodischen Abständen einer NOₓ-Regeneration unterzogen werden, wofür er üblicherweise mit einer fetten Abgasatmosphäre beaufschlagt wird, so dass absorbiertes NOₓ durch nunmehr im Abgas im Überschuss vorhandene Reduktionsmittel (HC, CO) konvertiert werden kann.

Es ist femer bekannt, eine Verbrennungskraftmaschine mit einer Abgasrückführung (AGR) zu betreiben, wobei ein Teil des Abgases dem der Verbrennungskraftmaschine zuzuführenden Luft-Kraftstoff-Gemisch zugemischt wird. Durch diese Maßnahme kann eine Verbrennungstemperatur und damit verbunden die NOₓ-Entstehung abgesenkt werden. Dazu wird üblicherweise in Abhängigkeit eines Betriebspunktes der Verbrennungskraftmaschine ein in einer Rückführleitung angeordnetes Abgasrückführventil angesteuert.

Die Regelung der NOₓ-Regeneration von NOₓ-Speicherkatalysatoren und der Abgasrückführung erfolgt üblicherweise unabhängig voneinander, so dass eine Abgasrückführung während einer NOₓ-Regeneration zugelassen wird. Hierdurch werden verschiedene Probleme aufgeworfen. Zunächst wird eine Dauer der Umschaltung von Mager- auf Fettbetrieb der Verbrennungskraftmaschine, die vom Zeitpunkt der Vorgabe eines fetten Luft-Kraftstoff-Gemisches bis zu dem tatsächlichen Vorliegen eines fetten Abgases verstreicht, unerwünscht verlängert. Dies ist auf das Vorhandensein sauerstoffreichen Abgases in der Abgasrückführleitung zurückzuführen, welches noch dem Brennraum der Maschine zugeführt wird, während bereits ein Fettmodus der Verbrennungskraftmaschine angefordert wird. Ein weiteres Problem ergibt sich durch das Umschalten von einem Schicht- auf einen Homogenbetrieb der Verbrennungskraftmaschine, welches üblicherweise mit der Umschaltung in den Fettmodus einhergeht. Damit verbunden kommt es insbesondere kurz nach der Betriebsumstellung zu Brennbarkeitsproblemen und Zündaussetzem, wenn das Gemisch trotz Erhöhung der Kraftstoffzufuhr zu mager zum Entflammen ist. Dieses Problem wird durch die Rückführung des zunächst noch mageren Abgases weiter verschärft. Schließlich wird auch die Dauer einer NOₓ-Regeneration durch die Abgasrückführung erheblich verlängert. Dies ist Folge des verminderten Abgasmassenstroms und des damit verbundenen verminderten Reduktionsmittelstroms, der für die Umsetzung der freigesetzten Stickoxide am NOₓ-Speicherkatalysator notwendig ist. Eine Vertängerung der Regenerationsdauer führt zu einem erheblichen Kraftstoffmehrverbrauch.

Aus DE 198 24 915 C1 und EP 0 752 521 A1 ist bekannt, bei einem Wechsel von Schichtladebetrieb auf Homogenbetrieb bei einer direkteinspritzenden Verbrennungskraftmaschine, insbesondere zur Durchführung einer Regeneration eines nachgeschalteten NOₓ-Speicherkatalysators, zunächst die AGR-Rate zu reduzieren oder die AGR vollständig auszuschalten, ehe die Verbrennungskraftmaschine auf ein fettes Verbrennungslambda umgeschaltet wird. Anschließend wird die NOₓ-Regeneration bei einer verminderten Abgasrückführrate oder ohne Abgasrückführung durchgeführt.

Der Erfindung liegt daher die Aufgabe zugrunde, ein Verfahren sowie eine Vorrichtung vorzuschlagen, durch welche der Übergang in den NOₓ-Regenerationsbetrieb gegenüber dem Stand der Technik verbessert wird.

Diese Aufgabe wird durch das Verfahren und die Vorrichtung mit den in den unabhängigen Ansprüchen 1 und 9 genannten Merkmalen gelöst. Erfindungsgemäß ist vorgesehen, dass einer Einleitung der NOₓ-Regeneration eine Verminderung der Abgasrückführrate oder eine Ausschaltung der Abgasrückführung vorausgeht, wobei ein Zeitpunkt des Beginns der Verminderung oder Ausschaltung der Abgasrückführung in Abhängigkeit von der vor und/oder nach der Verminderung oder Ausschaltung vorliegenden Abgasrückführrate bemessen wird. So sollte beispielsweise bei einer großen Differenz zwischen der vor und nach der Absenkung vorliegenden Rückführrate relativ frühzeitig mit ihrer Verminderung begonnen werden, um den Übergang möglichst fließend zu gestalten. Auf diese Weise kann die Umschaltung in den Regenerationsbetrieb weitestgehend momentenneutral erfolgen, so dass praktisch keine Veränderung im Fahrverhalten eines Fahrzeugs auftritt. Es ist ferner vorgesehen, die anschließende NOₓ-Regeneration bei einer verminderten Abgasrückführrate und/oder ohne Abgasrückführung durchzuführen. Somit wird ein schnelles und aussetzerfreies Umschalten der Verbrennungskraftmaschine von einem Mager- in einen Fettbetrieb gewährleistet und die Regenerationszeiten verkürzt. Femer wird infolge des schnellen Umschaltens eine NOₓ-Desorptionsspitze, die beim Durchgang des Lambdawertes von λ > 1 nach λ ≤ 1 beobachtet wird, verringert.

Es ist bevorzugt vorgesehen, dass die Abgasrückführrate vor Einleitung der NOₓ-Regeneration auf 0 bis 25 Vol.-%, insbesondere auf 5 bis 15 Vol.-%, abgesenkt wird. Während der NOₓ-Regenration wird gemäß einer bevorzugten Ausführung die Abgasrückführrate auf 0 bis 15 Vol.-%, insbesondere auf 0 bis 10 Vol.-%, geregelt. Derzeit übliche Rückführraten bewegen sich in Abhängigkeit von dem Motortyp im Bereich von 25 bis 35 Vol.-%. Dabei bezieht sich der Volumenanteil auf einen Anteil des rückgeführten Abgasvolumens an einem insgesamt der Verbrennungskraftmaschine zuzuführenden Luftvolumen.

Entsprechend einer vorteilhaften Ausgestaltung erfolgt die Verminderung der Abgasrückführrate vor Einleitung der NOₓ-Regeneration stufenweise oder kontinuierlich. Auch diese Maßnahme dient einer möglichst momentenneutralen Umstellung des Betriebsmodus der Verbrennungskraftmaschine.

Es ist bevorzugt vorgesehen, dass eine Abgasrückführrate, die nach der Verminderung oder Ausschaltung der Abgasrückführung vorliegt, während der NOₓ-Regeneration beibehalten oder nur noch geringfügig verändert wird.

Gemäß einer weiteren bevorzugten Ausführungsform beginnt die Verminderung der Abgasrückführrate 0,2 bis 10 s, insbesondere 2 s, vor Einleitung der NOₓ-Regeneration.

In der erfindungsgemäßen Vorrichtung zur Durchführung einer NOₓ-Regeneration sind Mittel vorgesehen, mit welchen die Verfahrensschritte Ausschaltung und/oder In der erfindungsgemäßen Vorrichtung zur Durchführung einer NOₓ-Regeneration sind Mittel vorgesehen, mit welchen die Verfahrensschritte Ausschaltung und/oder Drosselung einer Abgasrückführung während wenigstens eines Teils einer Regenerationsdauer ausführbar sind.

In einer bevorzugten Ausgestaltung umfassen diese Mittel eine Steuereinheit, in der eine Prozedur zur Steuerung der Verfahrensschritte zur Durchführung einer NOₓ-Regeneration und des NOₓ-Speicherkatalysators in digitaler Form hinterlegt ist, wobei die Steuereinheit in ein Motorsteuergerät integriert sein kann.

Weitere vorteilhafte Ausgestaltungen der Erfindung sind Gegenstand der übrigen Unteransprüche.

Die Erfindung wird nachfolgend in Ausführungsbeispielen anhand der zugehörigen Zeichnungen näher erläutert. Es zeigen:
- Figur 1: eine schematische Anordnung einer Verbrennungskraftmaschine mit einem Abgaskanal und
- Figur 2: einen zeitlichen Verlauf von Lambda während einer NOₓ-Regeneration mit und ohne Abgasrückführung.

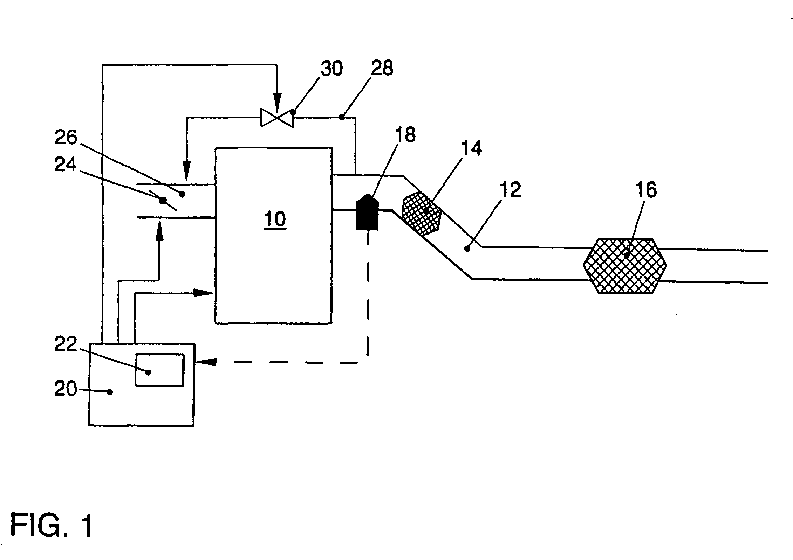

Figur 1 zeigt eine schematische Darstellung einer Verbrennungskraftmaschine 10 mit einem dieser zugeordneten Abgaskanal 12. Stromab der Verbrennungskraftmaschine 10 sind ein kleinvolumiger Vorkatalysator 14 sowie ein NOₓ-Speicherkatalysator 16 in dem Abgaskanal 12 angeordnet. Eine Lambdasonde 18 dient der Erfassung einer Sauerstoffkonzentration im Abgas und befindet sich noch vor dem Katalysatorsystem 14, 16 im Abgaskanal 12. Die Lambdasonde 18 gibt ein Signal an ein Motorsteuergerät 20 wieder, welches dieses und andere Messsignale sowie Betriebsparameter der Verbrennungskraftmaschine 10 verarbeitet. Integriert in das Motorsteuergerät 20 ist eine Steuereinheit 22, in welcher die erfindungsgemäße Prozedur zur Durchführung einer NOₓ-Regeneration des NOₓ-Speicherkatalysators 16 in digitaler Form hinterlegt ist. In Abhängigkeit aller eingehenden Signale steuert das Motorsteuergerät 20 beziehungsweise die Steuereinheit 22 den Betriebsmodus der Verbrennungskraftmaschine 10, indem es beispielsweise Einfluss auf ein einzuspeisendes Luft-Kraftstoff-Gemisch nimmt. Zu diesem Zweck wird ein angesaugter Frischluftvolumenstrom durch Stellung einer Drosselklappe 24 in einem Ansaugrohr 26 geregelt. Ferner steuert das Motorsteuergerät 20 beziehungsweise die Steuereinheit 22 ein in einer Rückführleitung 28 angeordnetes Abgasrückführventil 30 an.

Wird nun während einer Magerphase der Verbrennungskraftmaschine 10 eine Regenerationsnotwendigkeit des NOₓ-Speicherkatalysators 16 festgestellt, so bewirkt die Steuereinheit 22 die Umschaltung der Verbrennungskraftmaschine 10 in einen homogenen, stöchiometrischen oder fetten Betriebsmodus. Dazu gibt die Steuereinheit 22 beispielsweise eine stärker geschlossene Stellung der Drosselklappe 24 vor, so dass der Sauerstoffanteil im zugeführten Luft-Kraftstoff-Gemisch reduziert wird. Erfindungsgemäß wird während wenigstens eines Teils der Regenerationsdauer die Abgasrückführung vermindert und/oder vollständig unterbunden. Auch dies geschieht durch eine entsprechende Steuerung des Abgasrückführventils 30 durch das Motorsteuergerät 20 beziehungsweise die Steuereinheit 22.

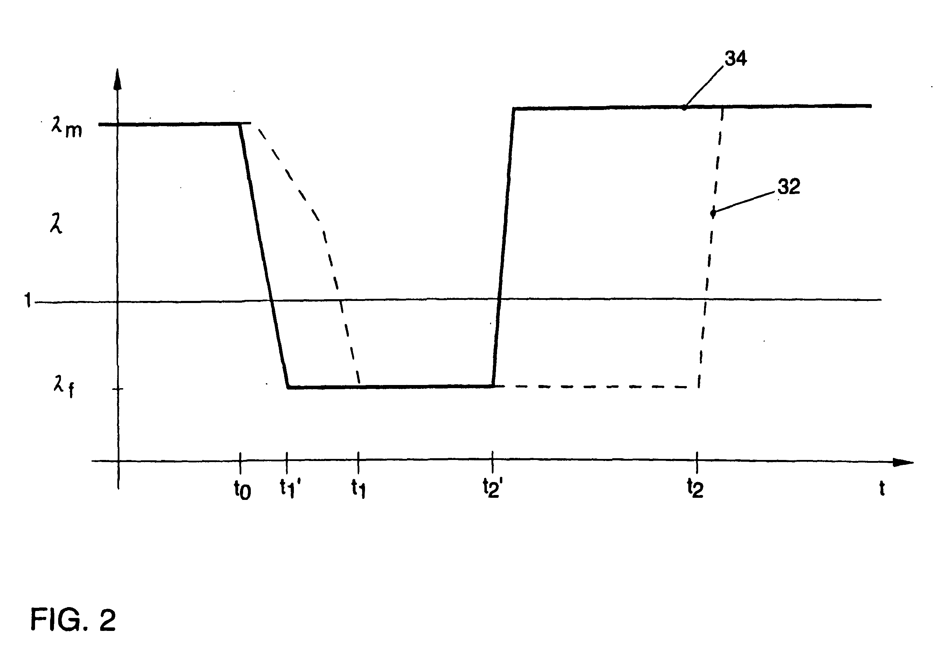

Figur 2 zeigt in einer vereinfachten Darstellung einen zeitlichen Verlauf eines vor dem Katalysatorsystem 14, 16 mit der Lambdasonde 18 gemessenen Lambdawertes während einer NOₓ-Regeneration des NOₓ-Speicherkatalysators 16. Dabei stellt die durchbrochene Linie 32 einen Lambdaverlauf während einer Regeneration mit Zuschaltung einer Abgasrückführung gemäß derzeit üblicher Praxis (Rückführrate zirka 30 Vol.-%) dar, während die durchgezogene Linie 34 einen entsprechenden Lambdaverlauf ohne Abgasrückführung zeigt. Während einer anfänglichen Magerphase weisen beide Verläufe 32, 34 ein konstantes Niveau entsprechend einer Lambdamagervorgabe λₘ auf. Nach Detektion einer Regenerationsnotwendigkeit und Umschalten eines der Verbrennungskraftmaschine 10 zugeführten Luft-Kraftstoff-Gemisches auf eine fette, das heißt kraftstoffreiche Zusammensetzung, zu einem Zeitpunkt t₀ verharrt das bei gleichzeitiger Abgasrückführung gemessene Signal 32 noch für eine gewisse Verzögerungsdauer bei dem mageren Lambdawert λₘ. Dies kann auf das sauerstoffreiche Abgas zurückgeführt werden, das aus der vorausgegangenen Magerphase sich noch in der Abgasrückführleitung 28 befindet und der angesaugten Frischluft zugeführt wird. Nach dieser Verzögerung setzt ein relativ flacher Abfall des Signals 32 bis zu einem Zeitpunkt t₁ ein, an dem ein der Lambdafettvorgabe λ_{f} entsprechender Wert erreicht ist. Die Flachheit des vorausgegangenen Abfalls des Lambdawertes ist ebenfalls Folge der Abgaseinspeisung in die angesaugte Frischluft. Während der folgenden Regenerationsdauer, die sich bis zu einem Zeitpunkt t₂ erstreckt, wird die Lambdafettvorgabe λ_{f} eingehalten und eingespeicherte Stickoxide NOₓ des NOₓ-Speicherkatalysators 16 mit den im Abgas vorhandenen Reduktionsmitteln CO und HC reduziert. Nach erfolgter Speicherentleerung zum Zeitpunkt t₂ wird die Verbrennungskraftmaschine 10 wieder in den Magermodus umgeschaltet, so dass sich der Lambdawert wieder auf die Lambdamagervorgabe λₘ einfindet.

Der erfindungsgemäß ohne Abgasrückführung gemessene Lambdaverlauf 34 (durchgezogene Linie) zeigt erhebliche Abweichungen von dem oben erläuterten, bei zugeschalteter Abgasrückführung gemessenen Verlauf 32. Ohne Abgasrückführung weist der Lambdaverlauf 34 einen nahezu unmittelbar nach Umschalten der Verbrennungskraftmaschine 10 in den fetten Betriebsmodus zum Zeitpunkt to einsetzenden und verhältnismäßig steil abfallenden Verlauf auf, so dass die Lambdafettvorgabe λ_{f} bereits zu einem Zeitpunkt t₁' erreicht ist. Femer ist die Regenerationsdauer, die für eine vollständige Entleerung des Speichers des NOₓ-Speicherkatalysators 16 aufgebracht werden muss, erheblich kürzer als bei zugelassener Abgasrückführung, so dass das Ende der NOₓ-Regeneration bereits zu einem Zeitpunkt t₂' erreicht wird. Die sehr lange Regenerationsdauer bei gleichzeitiger Abgasrückführung (Verlauf 32) ist ein Resultat der ständigen Abgasentnahme, so dass lediglich ein verringerter Reduktionsmittelmassenstrom zur Verfügung steht, um die Stickoxide des NOₓ-Speicherkatalysators zu konvertieren.

Insgesamt ist die Regenerationsdauer ohne Abgasrückführung gegenüber der mit gleichzeitiger Abgasrückführung notwendigen Regenerationsdauer annähemd um die Hälfte verkürzt. Die erfindungsgemäß bevorzugten Abgasrückführraten weisen Lambdaverläufe auf, die einen Zwischenzustand zwischen den erläuterten Verläufen repräsentieren.

### BEZUGSZEICHENLISTE

- 10: Verbrennungskraftmaschine
- 12: Abgaskanal
- 14: Vorkatalysator
- 16: NOₓ-Speicherkatalysator
- 18: Lambdasonde
- 20: Motorsteuergerät
- 22: Steuereinheit
- 24: Drosselklappe
- 26: Ansaugrohr
- 28: Abgasrückführleitung
- 30: Abgasrückführventil
- 32: Lambdaverlauf mit Abgasrückführung
- 34: Lambdaverlauf ohne Abgasrückführung
- λ_{f}: Lambdafettvorgabe
- λₘ: Lambdamagervorgabe

## Patentansprüche

1. Verfahren zur Durchführung einer NOₓ-Regeneration eines in einem Abgaskanal (12) einer Verbrennungskraftmaschine (10) angeordneten NOₓ-Speicherkatalysators (16), wobei die Verbrennungskraftmaschine (10) in verschiedenen Betriebsmodi betrieben werden kann und bei mindestens einem der Betriebsmodi eine Abgasrückführung in eine Ansaugluft der Verbrennungskraftmaschine (10) erfolgt, wobei einer Einleitung der NOₓ-Regeneration vorausgehend eine Abgasrückführrate verringert oder die Abgasrückführung ausgeschaltet wird und die NOₓ-Regeneration bei einer verminderten Abgasrückführrate oder ohne Abgasrückführung durchgeführt wird, **dadurch gekennzeichnet, dass** ein Zeitpunkt des Beginns der Verminderung oder Ausschaltung der Abgasrückführung in Abhängigkeit von der vor und/oder nach der Verminderung oder Ausschaltung vorliegenden Abgasrückführrate bemessen wird.

2. Verfahren nach Anspruch 1, **dadurch gekennzeichnet, dass** die Abgasrückführrate vor Einleitung der NOₓ-Regeneration auf 0 bis 25 Vol.-%, insbesondere auf 5 bis 15 Vol.-%, gesenkt wird.

3. Verfahren nach einem der Ansprüche 1 oder 2, **dadurch gekennzeichnet, dass** die NOₓ-Regeneration bei einer Abgasrückführrate von 0 bis 15 Vol.-%, insbesondere bei 0 bis 10 Vol.-%, durchgeführt wird.

4. Verfahren nach einem der vorhergehenden Ansprüche, **dadurch gekennzeichnet, dass** die Abgasrückführrate vor Einleitung der NOₓ-Regeneration stufenweise oder kontinuierlich gesenkt wird.

5. Verfahren nach einem der vorhergehenden Ansprüche, **dadurch gekennzeichnet, dass** ein nach der Verminderung oder Ausschaltung der Abgasrückführung vorliegender Endwert der Abgasrückführrate während der NOₓ-Regeneration beibehaltenen oder nur noch geringfügig verändert wird.

6. Verfahren nach einem der vorhergehenden Ansprüche, **dadurch gekennzeichnet, dass** die Verminderung der Abgasrückführrate 0,2 bis 10 s, insbesondere 2 s, vor Einleitung der NOₓ-Regeneration beginnt.

7. Verfahren nach einem der vorhergehenden Ansprüche, **dadurch gekennzeichnet, dass** die NOₓ-Regeneration bei einem stöchiometrischen oder fetten Betrieb der Verbrennungskraftmaschine durchgeführt wird.

8. Verfahren nach einem der vorhergehenden Ansprüche, **dadurch gekennzeichnet, dass** die NOₓ-Regeneration bei einem homogenen Betrieb der Verbrennungskraftmaschine durchgeführt wird.

9. Vorrichtung zur Durchführung einer NOₓ-Regeneration eines in einem Abgaskanal (12) einer Verbrennungskraftmaschine (10) angeordneten NOₓ-Speicherkatalysators (16), wobei ein Abgasrückführsystem (28, 30) der Verbrennungskraftmaschine (10) zugeordnet ist und bei mindestens einem Betriebsmodus der Verbrennungskraftmaschine (10) eine Abgasrückführung in eine Ansaugluft der Verbrennungskraftmaschine (10) erfolgt und wobei die Vorrichtung Mittel umfasst, mit welchen eine Verminderung und/oder Ausschaltung der Abgasrückführung vor Einleitung der NOₓ-Regeneration und Durchführung der NOₓ-Regeneration bei einer verminderten Abgasrückführrate oder ohne Abgasrückführung ausführbar ist, **dadurch gekennzeichnet, dass** die Mittel einen Zeitpunkt des Beginns der Verminderung oder Ausschaltung der Abgasrückführung in Abhängigkeit von der vor und/oder nach der Verminderung oder Ausschaltung vorliegenden Abgasrückführrate bemessen.

10. Vorrichtung nach Anspruch 9, **dadurch gekennzeichnet, dass** die Mittel eine Steuereinheit (22) umfassen, in der eine Prozedur zur Steuerung der Verfahrensschritte zur Durchführung einer NOₓ-Regeneration eines NOₓSpeicherkatalysators in digitaler Form hinterlegt ist.

11. Vorrichtung nach Anspruch 10, **dadurch gekennzeichnet, dass** die Steuereinheit (22) in ein Motorsteuergerät (20) integriert ist.

## Claims

1. Method for the implementation of an NOₓ regeneration of an NOₓ storage catalyst (16) arranged in an exhaust-gas duct (12) of a combustion engine (10), wherein the combustion engine (10) can be operated in various operating modes, and a recycling of exhaust-gas into an intake air of the combustion engine (10) takes place in at least one of the operating modes; wherein an exhaust-gas recycling rate is reduced or the exhaust-gas recycling is cut out before an initiation of the NOₓ regeneration, and the NOₓ regeneration is implemented with a reduced exhaust-gas recycling rate or without exhaust-gas recycling,
**characterised in that**
a point in time for the beginning of the reduction or cut-out of the exhaust-gas recycling is specified dependent upon the exhaust-gas recycling rate present before and/or after the reduction or cut-out.

2. Method according to claim 1,
**characterised in that**
the exhaust-gas recycling rate before the initiation of the NOₓ regeneration is reduced to 0 to 25% by volume, especially 5 to 15% by volume.

3. Method according to.any one of claims 1 or 2,
**characterised in that**
the NOₓ regeneration is implemented with an exhaust-gas recycling rate from 0 to 15% by volume, especially 0 to 10% by volume.

4. Method according to any one of the preceding claims,
**characterised in that**
the exhaust-gas recycling rate before the initiation of the NOₓ regeneration is lowered stepwise or continuously.

5. Method according to any one of the preceding claims,
**characterised in that**
a final value of the exhaust-gas recycling rate present after the reduction or cut-out of the exhaust-gas recycling is maintained or modified only slightly during the NOₓ regeneration.

6. Method according to any one of the preceding claims,
**characterised in that**
the reduction of the exhaust-gas recycling rate begins 0.2 to 10 seconds, especially 2 seconds before the initiation of the NOₓ regeneration.

7. Method according to any one of the preceding claims,
**characterised in that**
the NOₓ regeneration is implemented with a stoichiometric or rich operating mode of the combustion engine.

8. Method according to any one of the preceding claims,
**characterised in that**
the NOₓ regeneration is implemented with a homogeneous operating mode of the combustion engine.

9. Device for the implementation of an NOₓ regeneration of an NOₓ storage catalyst (16) arranged in an exhaust-gas duct (12) of a combustion engine (10), wherein an exhaust-gas recycling system (28, 30) is allocated to the combustion engine (10), and a recycling of exhaust-gas into an intake air of the combustion engine (10) takes place in at least one operating mode of the combustion engine (10); and wherein the device provides means, with which a reduction and/or cut-out of the exhaust-gas recycling can be implemented before the initiation of the NOₓ regeneration, and the implementation of the NOₓ regeneration can be implemented with a reduced exhaust-gas recycling rate or without exhaust-gas recycling,
**characterised in that**
the means specifies a point in time for the beginning of the reduction or the cut-out of the exhaust-gas recycling dependent upon the exhaust-gas recycling rate present before and/or after the reduction or cut-out.

10. Device according to claim 9,
**characterised in that**
the means comprise a control unit (22), in which a procedure for controlling the procedural stages for the implementation of an NOₓ regeneration of an NOₓ storage catalyst is stored in digital form.

11. Device according to claim 10,
**characterised in that**
the control unit (22) is integrated in an engine control device (20).

## Revendications

1. Procédé destiné à l'exécution d'une régénération de NOₓ d'un catalyseur à accumulation de NOₓ (16) disposé dans un tuyau de gaz d'échappement (12) d'un moteur à combustion interne (10), le moteur à combustion interne (10) pouvant fonctionner dans différents modes de fonctionnement, et un recyclage de gaz d'échappement dans un air d'aspiration du moteur à combustion interne (10) étant effectué lors d'au moins un mode de fonctionnement, un taux de recyclage de gaz d'échappement étant réduit ou le recyclage de gaz d'échappement étant coupé avant le déclenchement d'une régénération de NOₓ, et la régénération de NOₓ étant effectuée à un taux de recyclage réduit de gaz d'échappement ou sans recyclage de gaz d'échappement, **caractérisé en ce qu'**un moment du début de la réduction ou de la coupure du recyclage de gaz d'échappement est déterminé en fonction du taux de recyclage de gaz d'échappement existant avant et/ou après la réduction ou la coupure.

2. Procédé selon la revendication 1, **caractérisé en ce que,** avant le déclenchement de la régénération de NOₓ, le taux de recyclage de gaz d'échappement est réduit à une valeur de 0 à 25 % en volume, notamment de 5 à 15 % en volume.

3. Procédé selon l'une des revendications 1 ou 2, **caractérisé en ce que** la régénération de NOₓ est effectuée à un taux de recyclage de gaz d'échappement de 0 à 15 % en volume, notamment de 0 à 10 % en volume.

4. Procédé selon l'une des revendications précédentes, **caractérisé en ce que,** avant le déclenchement de la régénération de NOₓ, le taux de recyclage de gaz d'échappement est réduit progressivement ou en continu.

5. Procédé selon l'une des revendications précédentes, **caractérisé en ce qu'**une valeur finale du taux de recyclage de gaz d'échappement existant après la réduction ou la coupure du recyclage de gaz d'échappement est maintenue ou n'est que faiblement modifiée pendant la régénération de NOₓ.

6. Procédé selon l'une des revendications précédentes, **caractérisé en ce que** la réduction du taux de recyclage de gaz d'échappement commence 0,2 à 10 s, notamment 2 s, avant le déclenchement de la régénération de NOₓ.

7. Procédé selon l'une des revendications précédentes, **caractérisé en ce que** la régénération de NOₓ est effectuée lors d'un régime stoechiométrique ou riche du moteur à combustion interne.

8. Procédé selon l'une des revendications précédentes, **caractérisé en ce que** la régénération de NOₓ est effectuée lors d'un régime homogène du moteur à combustion interne.

9. Dispositif destiné à l'exécution d'une régénération de NOₓ d'un catalyseur à accumulation de NOₓ (16) disposé dans un tuyau de gaz d'échappement (12) d'un moteur à combustion interne (10), un système de recyclage (28, 30) de gaz d'échappement étant associé au moteur à combustion interne (10), et un recyclage de gaz d'échappement dans un air d'aspiration du moteur à combustion interne (10) étant effectué lors d'au moins un mode de fonctionnement du moteur à combustion interne (10), et le dispositif comportant des moyens avec lesquels une réduction et/ou une coupure du recyclage de gaz d'échappement peuvent être effectuées avant le déclenchement de la régénération de NOₓ et l'exécution de la régénération de NOₓ à un taux de recyclage réduit de gaz d'échappement ou sans recyclage de gaz d'échappement, **caractérisé en ce que** les moyens déterminent un moment du début de la réduction ou de la coupure du recyclage de gaz d'échappement en fonction du taux de recyclage de gaz d'échappement existant avant et/ou après la réduction ou la coupure.

10. Dispositif selon la revendication 9, **caractérisé en ce que** les moyens comprennent une unité de commande (22), dans laquelle une procédure de commande des phases de procédé pour l'exécution d'une régénération de NOₓ d'un catalyseur à accumulation de NOₓ est mémorisée sous une forme numérique.

11. Dispositif selon la revendication 10, **caractérisé en ce que** l'unité de commande (22) est intégrée dans un appareil de commande de moteur (20).
